Europäisches Patentamt

(19) European Patent Office

Office européen des brevets

(11) Numéro de publication : **0 026 181**
**B1**

(12) **FASCICULE DE BREVET EUROPÉEN**

(51) Int. Cl.³ : **B 60 T 11/26, B 60 T 17/22**

(45) Date de publication du fascicule du brevet :
**20.04.83**

(21) Numéro de dépôt : **80900554.9**

(22) Date de dépôt : **25.03.80**

(86) Numéro de dépôt international :
**PCT/FR 80/00043**

(87) Numéro de publication internationale :
**WO WO/80020 (02.10.80 Gazettee 80/22)**

(54) **RESERVOIR MOULE A DEUX CUVES POUR DOUBLE CIRCUIT DE FREINAGE.**

(30) Priorité : **27.03.79 FR 7907649**

(43) Date de publication de la demande :
**08.04.81 Bulletin 81/14**

(45) Mention de la délivrance du brevet :
**20.04.83 Bulletin 83/16**

(84) Etats contractants désignés :
**DE FR GB SE**

(56) Documents cités :
**US A 3 159 974**

(73) Titulaire : **Société de Transformation des Matières Plastiques**
**Zone Industrielle du Point du Jour Avenue d'Angers**
**F-53002 Laval (FR)**

(72) Inventeur : **HEAUME, Jean**
**54, rue de la Senelle**
**F-53000 Laval (FR)**

(74) Mandataire : **Elschen, Roland et al**
**Solvay & Cie Département de la Propriété Industrielle**
**Rue de Ransbeek 310**
**B-1120 Bruxelles (BE)**

Jouve, 18, rue St-Denis, 75001 Paris, France

Réservoir moulé à deux cuves pour double circuit de freinage

L'invention se rapporte à un réservoir constitué de deux compartiments communiquant entre eux, devant l'un et l'autre enfermer un liquide dont le niveau minimal est détecté par un dispositif électrique d'alarme. Elle s'applique plus particulièrement au réservoir d'un système de freinage à double circuit des véhicules automobiles.

En effet, il est bien connu de doter, pour des raisons de sécurité, de tels systèmes de deux circuits indépendants, de façon telle que si une fuite se produit sur l'un d'eux, l'autre reste encore en état de marche.

De tels systèmes utilisent deux cuves, (une par circuit), communiquant entre elles selon leur niveau minimal. Pour avertir le conducteur que le niveau minimal est atteint, on utilise des détecteurs électriques et en général un seul détecteur pour les deux cuves.

Ainsi par exemple, dans le brevet FR-A-2 094 083 du 7 juin 1971, on décrit un réservoir à deux compartiments communiquant d'une part par un tube en U dont les extrémités sont situées l'une et l'autre selon le niveau minimal, et d'autre part, par un bief formant seuil placé au voisinage du niveau maximal.

Lorsque le véhicule est fortement incliné par exemple en côte, ou en descente, le liquide peut passer d'une cuve dans l'autre, avec pour conséquence un abaissement sensible du niveau dans l'une d'elles. Si cette cuve est celle où est placé le détecteur de niveau, celui-ci se met à clignoter alors qu'il ne s'agit nullement d'une mise hors service du circuit. Il en est de même en ce qui concerne les vibrations du véhicule.

Pour remédier à cet inconvénient, il a été proposé de séparer les deux cuves par une cloison étanche et d'établir la communication uniquement par les extrémités les plus éloignées de ces cuves au moyen de cloisons supplémentaires. De cette manière, on limite efficacement le passage du liquide d'une cuve dans l'autre lorsque le niveau du liquide s'incline ou lorsqu'il se forme des vagues.

Cependant, la formation de ces cloisons supplémentaires augmente le prix de la pièce et de plus elle élimine certains procédés de réalisation de ces cuves, par exemple le procédé d'extrusion-soufflage. En effet, à l'intérieur d'un corps obtenu par ce procédé on ne peut placer à volonté des cloisons.

L'invention vise à éviter le clignotement intempestif du détecteur sans recourir à des constructions aussi compliquées tout en utilisant le procédé d'extrusion-soufflage.

Selon l'invention, le réservoir est constitué par deux cuves communiquant entre elles par un canal d'intercommunication, la première de ces cuves étant pourvue de l'entrée de remplissage et d'un dispositif détecteur de niveau, susceptible d'entrer en action pour un niveau minimal situé au-dessus du niveau supérieur du canal d'intercommunication, les plafonds des deux cuves étant situés à des niveaux différents, et le plafond de la seconde cuve est situé au niveau minimal admissible dans la première cuve ou au-dessous de ce niveau.

De cette manière, cette cuve est toujours pleine et aucun liquide ne peut passer dans celle-ci venant de l'autre, quelle que soit l'inclinaison du véhicule et par conséquent, faire baisser accidentellement le niveau dans cette dernière au-dessous du niveau minimal.

Certes, on a déjà proposé dans le brevet DE-A-28 33 229, de réaliser des ensembles à deux cuves à plafonds respectifs sur deux niveaux, mais le plafond le plus bas n'est nullement situé au niveau de l'interconnexion des cuves, si bien que rien n'empêche le liquide de passer de l'une à l'autre selon les inclinaisons.

En outre, dans le brevet US-A-3 159 974, on décrit un maître cylindre d'actionnement simultané de deux circuits de freinage indépendants comportant un réservoir à deux cuves séparées par une cloison formant déversoir, le plafond de la seconde cuve étant situé au-dessous du seuil de celui-ci. Dans ce brevet, la position du plafond le plus bas ne joue aucun rôle sauf celui de limiter le volume du liquide dans la chambre en cause puisque son alimentation se fait par pompe, par déversement à partir de l'autre cuve. Les résultats recherchés par la présente invention ne pourraient donc être atteints même si cette dernière cuve était pourvue d'une sonde de détection, ce qui n'est jamais le cas dans un maître cyclindre de freinage, puisqu'il n'y a aucune variation de niveau à détecter, la pompe assurant constamment le plein.

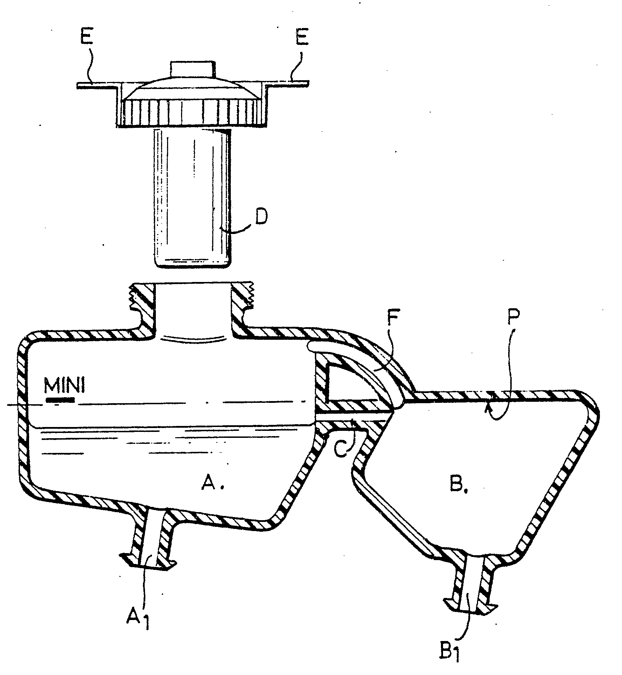

D'autres particularités et avantages de l'invention apparaîtront à la lecture de la description et des revendications qui suivent, faites en regard du dessin annexé lequel représente en coupe un réservoir conforme à l'invention.

Comme on peut le voir sur cette figure, ce réservoir comprend deux cuves A et B en communication par le canal C. Dans la cuve A plonge la sonde du détecteur D du type classique dont les contacts E sont reliés au clignoteur (non représenté).

Chaque cuve par un ajutage A1 (ou B1) est reliée au circuit qu'elle doit alimenter. Le canal C est placé au-dessous du niveau minimal repéré MINI.

Le plafond P de la cuve B est situé à ce niveau minimal et peut être situé au-dessous de ce niveau.

De cette manière, même si l'ensemble des deux cuves s'incline fortement, le niveau ne peut varier dans la cuve A, puisque la cuve B étant déjà pleine jusqu'au plafond P, ne peut recevoir un volume quelconque de liquide venant de A par C.

Pour permettre le remplissage total de la cuve B, celle-ci est pourvue d'un évent permettant à l'air de s'évacuer au fur et à mesure de la montée du liquide.

Avantageusement, cet évent·est réalisé sous la forme d'un canal F reliant les parties supérieures de A et B.

L'invention s'applique plus particulièrement aux doubles circuits de freinage des véhicules.

### Revendications

1. Réservoir constitué par deux cuves (A), (B) communiquant entre elles par un canal d'intercommunication (C), la première de ces cuves (A) étant pourvue d'une entrée de remplissage et d'un dispositif détecteur de niveau (D), susceptible d'entrer en action pour un niveau minimal situé au-dessus du niveau supérieur du canal d'intercommunication (C), les plafonds des deux cuves étant situés à des niveaux différents, caractérisé en ce que le plafond (P) de la seconde cuve (B) est situé au niveau minimal admissible dans la première cuve (A) ou au-dessous de ce niveau.

2. Réservoir selon la revendication 1, caractérisé en ce que en sus de leur communication par le canal d'intercommunication (C), les parties supérieures des deux cuves (A), (B) sont en relation directe par l'intermédiaire d'un canal d'évent (F) permettant la sortie de l'air contenu dans la seconde cuve (B) avant remplissage total.

### Claims

1. Tank consisting of two vats (A), (B), communicating with one another via an intercommunication channel (C), the first of these vats (A) being provided with a filling inlet and a level-detecting device (D) capable of being actuated for a minimum level located above the upper level of the intercommunication channel (C), the ceilings of the two vats being located at different levels, characterised in that the ceiling (P) of the second vat (B) is located at the minimum level permitted in the first vat (A) or below this level.

2. Tank according to Claim 1, characterised in that, in addition to their communication via the intercommunication channel (C), the upper parts of the two vats (A), (B) are joined directly via a vent channel (F) making it possible for the air contained in the second vat (B) to escape before total filling.

### Ansprüche

1. Tank gebildet aus zwei Becken (A), (B), die über einen Verbindungskanal (C) miteinander in Verbindung stehen, wobei das erste dieser Becken (A) mit einem Fülleinlaß und einem Niveaudetektor (D) ausgestattet ist, der für ein Minimalniveau oberhalb des oberen Niveaus des Verbindungskanals (C) in Betrieb setzbar ist, wobei die oberen Wände der beiden Becken auf unterschiedlichen Niveaus liegen, dadurch gekennzeichnet, daß die obere Wand (P) des zweiten Beckens (B) auf dem in dem ersten Becken (A) zulässigen Minimalniveau oder unterhalb dieses Niveaus liegt.

2. Tank nach Anspruch 1, dadurch gekennzeichnet, daß zusätzlich zu ihrer Verbindung über den Verbindungskanal (C) die oberen Bereiche der beiden Becken (A), (B) in direkter Beziehung zueinander stehen über einen Entlüftungskanal (F), der den Austritt von in dem zweiten Becken (B) enthaltener Luft vor der vollständigen Füllung gestattet.